(19) Europäisches Patentamt
European Patent Office
Office européen des brevets

(11) **EP 2 146 203 A2**

(12) **EUROPÄISCHE PATENTANMELDUNG**

(43) Veröffentlichungstag:
**20.01.2010 Patentblatt 2010/03**

(51) Int Cl.:
**G01N 29/04** *(2006.01)*    **G01N 29/24** *(2006.01)*
**G01N 29/44** *(2006.01)*

(21) Anmeldenummer: **09009296.6**

(22) Anmeldetag: **16.07.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **18.07.2008 DE 102008033755**

(71) Anmelder: **Fraunhofer-Gesellschaft zur Förderung der angewandten Forschung e.V. 80686 München (DE)**

(72) Erfinder:
• **Altpeter, Iris**
  **66123 Saarbrücken (DE)**
• **Dobman, Gerd**
  **66125 Saarbrücken (DE)**
• **Hübschen, Gerhard**
  **66740 Saarlouis (DE)**

(74) Vertreter: **Rösler, Uwe**
  **Rösler Patentanwaltskanzlei**
  **Landsberger Strasse 480a**
  **81241 München (DE)**

(54) **Verfahren zur spannungsunabhängigen Texturbestimmung eines ferromagnetischen Werkstückes**

(57) Beschrieben wird ein Verfahren zur spannungsunabhängigen Texturbestimmung eines ferromagnetischen Werkstückes mittels eines zerstörungsfreien Ultraschallwellen-Verfahrens, das auf einer Ultraschallwellenanregung innerhalb des Werkstückes basiert, bei dem horizontal polarisierte Ultraschallwellen, kurz SH-Wellen, innerhalb des Werkstücks angeregt und nach Durchlaufen einer Wegstrecke durch das Werkstück detektiert und ausgewertet werden.

Die Erfindung zeichnet sich dadurch aus, dass die Anregung der SH-Wellen im Wege dynamischer Magnetostriktion erfolgt, bei der das Werkstück einem sich zeitlich veränderlichen Wechselmagnetfeld $H_\omega(t)$ ausgesetzt wird, dass das Detektieren der Ultraschallwellen mit wenigstens einem Empfänger durchgeführt wird, der Empfangssignale $E(H_\omega(t))$ generiert, die als Funktion des Wechselmagnetfeldes $H_\omega(t)$ erfasst werden, und dass zur Auswertung und Texturbestimmung jene Wechselmagnetfeldgrößen $H_\omega(t)$ zugrunde gelegt werden, bei denen für das Empfangssignal $E(H_\omega(t))$ gilt:

$$\frac{dE(H_\omega(t))}{d(H_\omega(t))} = 0 \qquad und \qquad \frac{d}{d(H_\omega(t))}\left(\frac{dE(H_\omega(t))}{d(H_\omega(t))}\right) > 0 \quad mit \quad H_\omega(t) \neq 0$$

Fig. 1

EP 2 146 203 A2

**Beschreibung**

**Technisches Gebiet**

Die Erfindung bezieht sich auf ein Verfahren zur spannungsunabhängigen Texturbestimmung eines ferromagnetischen Werkstückes mittels eines zerstörungsfreien Ultraschallwellen-Verfahrens, das auf einer Ultraschallwellenanregung innerhalb des Werkstückes basiert, bei dem horizontal polarisierte Ultraschallwellen, kurz SH-Wellen, innerhalb des Werkstücks angeregt und nach Durchlaufen einer Wegstrecke durch das Werkstück detektiert und ausgewertet werden.

**Stand der Technik**

Ein gattungsgemäßes Verfahren zur Texturbestimmung eines ferromagnetischen Werkstoffes mittels zerstörungsfreier Ultraschallwellentechnologie geht aus der US 4,899,589 hervor. Unter Verwendung elektromagnetischer Ultraschallwandler, kurz EMUS-Wandler, werden Ultraschallwellen, vorzugsweise horizontal polarisierte Ultraschallwellen innerhalb eines zu untersuchenden Werkstückes angeregt, deren richtungsabhängige Ausbreitungsgeschwindigkeiten sowohl von sogenannten Moden geringerer Ordnung als auch Moden höherer Ordnung erfasst und zur Texturbestimmung herangezogen werden. Die auf diese Weise ermittelten Ausbreitungsgeschwindigkeiten finden Eingang in einen mathematischen Auswertealgorithmus zur Berechnung der Körnigkeit des zu untersuchenden Werkstückes. Der Auswertalgorithmus sowie die diesem zugrunde liegende Theorie ist in einem Beitrag R. B. Thompson et al. beschrieben: "Interference of Stress and Textur from the angular dependence ultrasonic plate mode velocities", nondestructive evaluation of microstructure for process control, H.N.G. Wadley, Editor (AFM. Metal Parc, Ohio 1985, Seite 73 bis 80) entnehmbar.

Die Erfassung der Textur von ferromagnetischen Werkstücken spielt eine große Rolle bei der Herstellung und Weiterverarbeitung von kaltgewalzten Stahlblechen oder -bändern. Mit der plastischen Verformung von Kristallen ist je nach Art der Verformung eine charakteristische Änderung der Kristallorientierung verbunden. Durch die Änderung der Orientierungen, beispielsweise beim Walzen, wird eine ursprünglich regellose Orientierungsverteilung in eine nichtregellose, vielmehr für Material und Umformvorgang typische Verteilung überführt, so dass einige Orientierungen besonders häufig, andere Orientierungen dagegen seltener vorkommen. Die Häufigkeitsverteilung von Orientierungen wird üblicherweise als Textur bezeichnet, die sich durch Rekristallisationsprozesse in charakteristischer Weise zu verändern vermag.

Die Ausbildung einer nicht regellosen Textur hat Konsequenzen für die mechanischen Eigenschaften des jeweiligen Werkstoffes, insbesondere bei der Blechumformung. Setze man einen einzelnen Kristallit aus einem vielkristallinen Werkstoff in unterschiedlichen Richtungen einer Zugbelastung, so wären die entsprechenden Spannungs-Dehnungsdiagramme verschieden. In manchen Richtungen erscheint der Kristallit weicher in anderen härter. Liegt deshalb in einem Vielkristall eine ausgeprägte Textur vor, so verformt sich das Material nicht in allen Richtungen einheitlich, es verhält sich somit anisotrop. Ausgeprägte Texturen führen daher zu Schwierigkeiten bei der Blechumformung.

Die Auswirkungen der Textur auf die Blechumformung lassen sich durch die Bestimmung des so genannten $r_m$-Wertes abschätzen. Bei der Blechumformung sind ein möglichst leichter Materialfluss parallel zur Blechoberfläche und ein möglichst erschwerter Materialfluss senkrecht zur Blechoberfläche, also in Blechdickenrichtung wünschenswert. Auskunft darüber gibt der $r_m$-Wert, der nach einer Zugverformung parallel zur Blechrichtung die Dehnung in den dazu senkrechten Richtungen, also parallel zur Blechdicke und parallel zur Blechoberfläche, d.h. senkrecht zur Blechdicke, gemessen wird. Ein großer $r_m$-Wert ist für die Blechumformung daher von Vorteil, weil ein erschwertes Fließen in Blechdicke eine schnelle Dickenabnahme beim Umformen verhindert, was der Gefahr einer Risseinleitung entgegenwirkt. Zur Bestimmung des $r_m$-Wertes wird üblicherweise aus dem Blech eine Probe herausgeschnitten, bei der die Zugrichtung senkrecht zur Walzrichtung liegt. Da eine einzelne Richtung in der Blechebene jedoch keinen Aufschluss darüber geben kann, wie der $r_m$-Wert unter einem anderen Winkel zur Walzrichtung aussehen würde, schneidet man Zugproben parallel und senkrecht zur Walzrichtung und unter einem Winkel von jeweils + 45° dazu aus und bestimmt die $r_m$-Werte in geeigneter, an sich bekannter Weise.

Die vorstehenden Ausführungen zeigen, dass es von besonderem Vorteil wäre, wenn eine exakte, schnell und insbesondere auch aufwandsreduzierte technische Verfahrensweise zur Verfügung stünde die Textur, d.h. Informationen über die planare Anisotropie eines Werkstückes, so insbesondere eines aus ferromagnetischem Material bestehenden Kaltbandes, zu erhalten.

Neben der eingangs erwähnten Texturbestimmung mittels zerstörungsfreier Ultraschallwellentechnik stehen auch Möglichkeiten zur Verfügung Gefügeinformationen von Werkstücken unter Anwendung von Röntgen- und Neutronenbeugungsverfahren zu gewinnen, doch stellen dies Möglichkeiten dar, die keine zerstörungsfreie Untersuchungstechnik entsprechen.

Aus der US 5,154,081 sind eine Vorrichtung sowie ein Verfahren zur Textur und Spannungszustandserfassung an Bauteilen mit einem elektromagnetischen Ultraschallwandlersystem zu entnehmen, bei dem aus einer Laufzeitmessung der in das Bauteil eingekoppelten und empfangenen Ultraschallwellen die Ausbreitungsgeschwindigkeit der Ultraschallwellen erfasst wird, aus der wiederum Aussagen über die Textur und den Spannungszustand des untersuchten Bauteils getroffen werden.

Auf Basis des gleichen Zusammenhanges zwischen Ausbreitungsgeschwindigkeit von Ultraschallwellen und Textur und Spannungszustand eines zu untersuchenden Werkstückes stützt sich die Erkenntnis in dem Beitrag von A.V. Clark et al., "Ultrasonic Measurement of Sheet Steel Texture and Formability; Comparison with Neutron Diffraction and Mechanical Measurements", Research in Nondestructive Evaluation, (1999)2, 239-257.

**Darstellung der Erfindung**

Der Erfindung liegt die Aufgabe zugrunde ein Verfahren zur spannungsunabhängigen Texturbestimmung eines ferromagnetischen Werkstückes mittels eines zerstörungsfreien Ultraschallwellen-Verfahrens, das auf einer Ultraschallwellenanregung innerhalb des Werkstückes basiert, bei dem horizontal polarisierte Ultraschallwellen, kurz SH-Wellen, innerhalb des Werkstückes angeregt und nach Durchlaufen einer Wegstrecke durch das Werkstück detektiert und ausgewertet werden, derart weiterzubilden, dass die mit dem bekannten Verfahren verbundenen technischen sowie auch auswerterelevante Aufwendungen reduziert werden sollen ohne dabei die Zuverlässigkeit mit der bisher Texturbestimmungen vorgenommen werden zu beeinträchtigen.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der Beschreibung unter Bezugnahme auf das Ausführungsbeispiel zu entnehmen.

Lösungsgemäß zeichnet sich das Verfahren zur Texturbestimmung eines ferromagnetischen Werkstückes mittels eines zerstörungsfreien Ultraschallwellen-Verfahrens gemäß dem Oberbegriff des Anspruches 1, dadurch aus, dass die Anregung der SH-Wellen im Wege dynamischer Magnetostriktion erfolgt, bei der das Werkstück einem sich zeitlich veränderlichen Wechselmagnetfeld $H_\omega(t)$ ausgesetzt wird, d.h. das Wechselmagnetfeld weist eine weitgehend als konstant vorgebbare Erregerfrequenz w und eine zeitlich variable Amplitude auf. Die sich innerhalb des Werkstückes ausbreitenden Ultraschallwellen werden mit wenigstens einem Empfänger detektiert, der Empfangssignale $E(H_\omega(t))$ generiert, die als Funktion des Wechselmagnetfeldes $H_\omega(t)$ erfasst werden. Zur Auswertung und Texturbestimmung werden jene Wechselmagnetfeldgrößen $H_\omega(t)$ zugrundegelegt, bei denen für das Empfangssignal $E(H_\omega(t))$ gilt:

$$\frac{dE(H_\omega(t))}{d(H_\omega(t))} = 0$$

*und*

$$\frac{d}{d(H_\omega(t))}\left(\frac{dE(H_\omega(t))}{d(H_\omega(t))}\right) > 0 \quad mit \quad H_\omega(t) \neq 0$$

Erfindungsgemäß ist durch systematische Forschung erkannt worden, dass durch Messungen der Wechselmagnetfeldgröße $H_w(t)$, bei der die erfassten Empfangssignale E als Funktion der Wechselmagnetfeldgröße $H_\omega(t)$ ein Minimum, vorzugsweise ein zweites Minimum einnehmen, die Bestimmung der Textur unabhängig vom Eigenspannungszustand des Werkstückes möglich ist.

Die weiteren Zusammenhänge des lösungsgemäßen Verfahrens werden unter Bezugnahme der in den Figuren dargestellten Messkurven näher erläutert.

Es zeigen:

Fig. 1   typischer Verlauf der Empfangsamplitude als Funktion des Magnet- feldes H, kurz dynamische Magnetostriktionskurve,

Fig. 2   Illustration zur Richtungsabhängigkeit der für die Texturbestimmung relevanten Wechselmagnetfeldgröße $H_\omega$

für Bleche bzw. Kalt- bänder mit verschiedenen Texturen bzw. $r_m$-Werten.

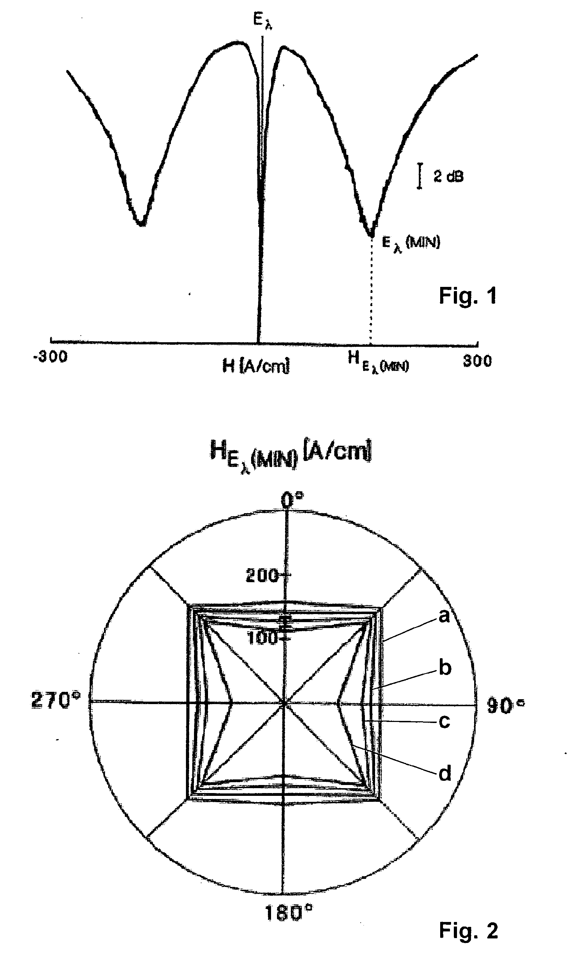

Zur Texturbestimmung eines Werkstückes, vorzugsweise in Art eines kaltgewalzten Bleches, wird zur Anregung horizontal polarisierter Ultraschallwellen, vorzugsweise mit SH-Moden SSo ein elektromagnetischer Ultraschallwandler auf die Oberfläche des Werkstückes aufgesetzt, beispielsweise unter Verwendung eines in der EP 0 579 255 B1 beschriebenen Ultraschall-Prüfkopfes oder eines in der EP 1 572 382 B1 beschriebenen elektromagnetischen Ultraschallwandlers. Getrennt vom Ort des Senders wird zum Nachweis der sich innerhalb des Werkstückes ausbreitenden Ultraschallwellen vorzugsweise ein Ultraschallwandler gleicher Bauart als Empfänger an der Oberfläche des Werkstückes angeordnet. Ein typischer Funktionsverlauf der am Ort des Empfängers gewonnenen Empfangssignale $E_\lambda$ ist in Figur 1 dargestellt, die ein Diagramm zeigt, längs dessen Ordinate die Empfangsamplitude $E_\lambda$ der durch den Empfänger detektierten Ultraschallwellen aufgetragen ist als Funktion des Wechselmagnetfeldes H[A/cm], das typischerweise eine Erregerfrequenz $\omega$ von 0,01 bis 10 Hz aufweist und dessen Amplitude in dem gezeigten Beispiel zwischen - 300 und +300 [A/cm] variiert.

Der charakteristische Funktionsverlauf der Empfangsamplitude $E_\lambda$ weist bei H = 0 ein erstes Minimum auf und verfügt überdies jeweils in Symmetrie zur Ordinate, d.h. unabhängig vom Vorzeichen des Magnetfeldes H über ein zweites Minimum $H_{E\lambda(min)}$. Erfindungsgemäß ist erkannt worden, dass die Lage des zweiten Minimums in der in Figur 1 dargestellten, so genannten dynamischen Magnetostriktionskurve $E_\lambda$ ($H_\omega(t)$) eine von der Textur des jeweiligen Werkstückes abhängige Prüfgröße darstellt. Durch die Messung der Prüfgröße $H_{E\lambda(min)}$ ist somit eine Texturbestimmung eines ferromagnetischen Werkstückes unabhängig vom jeweiligen Eigenspannungszustand des Werkstückes selbst möglich.

Ferner ist erkannt worden, dass die Prüfgröße $H_{E\lambda(min)}$ eine Richtungsabhängigkeit aufweist, d.h. wird die räumliche Lage des Empfängers relativ zum Sender in Bezug der Richtung, bei gleich bleibender Entfernung zwischen Sender und Empfänger verändert, so treten für das Werkstück charakteristische Variationen in der Prüfgröße $H_{E\lambda(min)}$ auf.

In Figur 2 sind hierzu Messprofile für die Prüfgröße $H_{E\lambda(min)}$ dargestellt, die jeweils an unterschiedlichen Werkstücken gewonnen worden sind. Insbesondere sind hierzu Messungen an kaltgewalzten Kaltbändern durchgeführt worden, wobei jede einzelne Messreihe an einem Werkstück mit einer Ultraschallsender und -empfängereinheit durchgeführt worden ist, bei der die Messrichtung, in Bezug zur Walzrichtung verändert worden ist. So fällt die in dem Polardiagramm gemäß Figur 2 festgelegte Polarachse von 0° mit der Walzrichtung zusammen. Beispielsweise stellen die unter 180° erfassten Prüfgrößen jene Messergebnisse dar, bei denen sich die Ultraschallwellen vom Ort der Anregung zur Empfängerposition entgegen der Walzrichtung ausgebreitet haben. Führt man ausreichend viele Messungen unter vorgebbar unterschiedlichen Winkeln relativ zur Walzrichtung pro Werkstück aus, so ergeben sich für jede einzelne Messrichtung in Bezug zur Walzrichtung für das Werkstück charakteristische Prüfgrößen $H_{E\lambda(min)}$, die jeweils dem Magnetfeld entsprechen, bei dem die Empfangsamplitude $E_\lambda$ das eingangs beschriebene zweite Minimum aufweist. Es zeigt sich deutlich, dass der Betrag der Prüfgröße weitgehend maximale Werte annimmt in Messbereichen zwischen 315° und 45° sowie 135° und 225° bezogen zur Walzlängsrichtung.

Darüber hinaus konnte lösungsgemäß festgestellt werden, dass bei Werkstücken mit unterschiedlichen Texturen, d.h. unterschiedlichen $r_m$-Werten, die Prüfgröße $H_{EA(min)}$ in jeder Messrichtung mit steigendem $r_m$-Wert abnimmt. Die in der Figur 2 dargestellten vier Messkurven wurden in nachstehender Weise an jeweils vier unterschiedlichen Werkstücken mit den jeweils nachfolgend unterschiedlichen Texturen aufgenommen:

a) $r_m$ = 0,95
b) $r_m$ = 1,04
c) $r_m$ = 1,4 und
d) $r_m$ = 1,49

Somit ist es möglich im Wege der messtechnischen Erfassung der bezeichneten Prüfgrößen $H_{E\lambda(min)}$ Texturen von Werkstücken zu bestimmen und durch geeigneten Vergleich mit Referenzwerten quantitativ zu beschreiben.

Ferner ist erkannt worden, dass durch künstliches Aufbringen von Lastspannungen innerhalb des jeweils zu vermessenden Werkstückes, beispielsweise zum Zwecke der Simulation von Eigenspannungen, die der Textur überlagert sein können, die Änderungen der Prüfgröße $H_{E\lambda(min)}$ unter dem Einfluss der Zugbelastungen im Fehlerband der Prüfgröße liegen. Darüber hinaus zeigt sich, dass die gesamte dynamische Magnetostriktionskurve, wie sie repräsentativ in Figur 1 dargestellt ist, gegen Lastspannungen und damit auch gegen Eigenspannungen unempfindlich ist.

In einem konkreten Ausführungsbeispiel zur Untersuchung eines gewalzten Kaltbandes wurden mittels dynamischer Magnetostriktion SH-Moden SSo ausgenutzt, wobei zur Erzeugung des dynamischen magnetischen Wechselfeldes $H_\omega(t)$ der Sendepuls zur Anregung des Senders mit einem HF-Burst-Signal der Frequenz f = 800 kHz angeregt wurde. Zur Messung wurden jeweils N = 2 Schwingungen mit einer Wiederholfrequenz von 50 Hz herangezogen. Die Magnetfeldaussteuerung des Sendemagnets betrug ca. $\pm$ 300 A/cm bei einer quasi statischen Erregerfrequenz w des magnetischen Wechselfeldes $H_\omega(t)$ von 10 mHz. Die Sende-Stromamplitude betrug etwa + 4 Ampere. Der Erregerstrom des Empfängermagneten lag bei 2 Ampere. Der Sendeimpuls wurde jeweils im Maximum des Erregerfeldes des Empfängers ausgelöst.

In einer bevorzugten Ausführungsform werden zwei anstelle von einem Empfänger eingesetzt, wobei der Sender sowie die beiden Empfänger längs einer Geraden angeordnet sind, wodurch es möglich ist, neben der Erfassung der dynamischen Magnetostriktion als Messgröße eine präzise Laufzeitmessung des SH-Modes SSo zur Texturmessung zu nutzen, indem in Durchschallungstechnik die Laufzeitdifferenz zwischen den beiden voneinander beabstandet angeordneten Empfangswandlern gemessen wird.

**Patentansprüche**

1. Verfahren zur spannungsunabhängigen Texturbestimmung eines ferromagnetischen Werkstückes mittels eines zerstörungsfreien Ultraschallwellen-Verfahrens, das auf einer Ultraschallwellenanregung innerhalb des Werkstückes basiert, bei dem horizontal polarisierte Ultraschallwellen, kurz SH-Wellen, innerhalb des Werkstücks angeregt und nach Durchlaufen einer Wegstrecke durch das Werkstück detektiert und ausgewertet werden,
**dadurch gekennzeichnet, dass** die Anregung der SH-Wellen im Wege dynamischer Magnetostriktion erfolgt, bei der das Werkstück einem sich zeitlich veränderlichen Wechselmagnetfeld $H_\omega(t)$ mit einer quasi statischen Erregerfrequenz ausgesetzt wird,
dass das Detektieren der Ultraschallwellen mit wenigstens einem Empfänger durchgeführt wird, der Empfangssignale $E(H_\omega(t))$ generiert, die als Funktion des Wechselmagnetfeldes $H_\omega(t)$ erfasst werden, und
dass zur Auswertung und Texturbestimmung jene Wechselmagnetfeldgrößen $H_\omega(t)$ zugrunde gelegt werden, bei denen für das Empfangssignal $E(H_\omega(t))$ gilt:

$$\frac{dE(H_\omega(t))}{d(H_\omega(t))} = 0$$

*und*

$$\frac{d}{d(H_\omega(t))}\left(\frac{dE(H_\omega(t))}{d(H_\omega(t))}\right) > 0 \quad mit \quad H_\omega(t) \neq 0$$

2. Verfahren nach Anspruch 1,
**dadurch gekennzeichnet, dass** zur Auswertung und Texturbestimmung die Wechselmagnetfeldgrößen $H_\omega(t)$ zugrunde gelegt werden, bei denen die Funktion $E(H_\omega(t))$ ihr zweites Minimum besitzt.

3. Verfahren nach Anspruch 1 oder 2
**dadurch gekennzeichnet, dass** die Anregung der SH-Wellen innerhalb des Werkstückes derart durchgeführt wird, dass Wellen mit SH-Mode SSo generiert und erfasst werden.

4. Verfahren nach einem der Ansprüche 1 bis 3,
**dadurch gekennzeichnet, dass** wenigstens zwei voneinander beabstandete Empfänger relativ zum Werkstück angeordnet werden,
dass eine Laufzeitmessung zur Erfassung einer Laufzeitdifferenz des SH-Modes SSo zwischen beiden Empfängern durchgeführt wird, und
dass die Laufzeitdifferenz und die daraus berechneten Schallgeschwindigkeiten zur Texturbestimmung genutzt wird.

5. Verfahren nach einem der Ansprüche 1 bis 4,
**dadurch gekennzeichnet, dass** als Werkstücke metallische, gepresste, gewalzte oder gezogene Flachmaterialien verwendet werden, insbesondere in Form von Kaltbändern.

6. Verfahren nach einem der Ansprüche 1 bis 5,
**dadurch gekennzeichnet, dass** zur Texturbestimmung die zur Auswertung herangezogenen Wechselmagnetfeld-

größen $H_\omega(E_{Min})$ mit an Referenzproben gewonnenen Messgrößen verglichen werden.

7. Verfahren nach einem der Ansprüche 1 bis 6,
**dadurch gekennzeichnet, dass** die Empfangssignale $E(H_\omega)$ in unterschiedlichen Raumrichtungen an dem Werkstück erfasst werden, und
dass die Gesamtheit aller jeweils zu den einzelnen Raumrichtungen ermittelten Wechselmagnetfeldgrößen $H_\omega(E_{Min})$ zur Texturbestimmung herangezogen wird.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4899589 A
- US 5154081 A
- EP 0579255 B1
- EP 1572382 B1

**In der Beschreibung aufgeführte Nicht-Patentliteratur**

- Interference of Stress and Textur from the angular dependence ultrasonic plate mode velocities. **Beitrag R. B. Thompson et al.** nondestructive evaluation of microstructure for process control. 1985, 73-80
- **A.V. Clark et al.** Ultrasonic Measurement of Sheet Steel Texture and Formability; Comparison with Neutron Diffraction and Mechanical Measurements. *Research in Nondestructive Evaluation,* 1999, vol. 2, 239-257